(19) **Europäisches Patentamt / European Patent Office / Office européen des brevets**

(11) **EP 2 806 556 B1**

(12) **FASCICULE DE BREVET EUROPEEN**

(45) Date de publication et mention de la délivrance du brevet:
**08.07.2020 Bulletin 2020/28**

(51) Int Cl.:
**H02P 21/14** *(2016.01)*    **H02P 23/12** *(2006.01)*
**H02P 29/66** *(2016.01)*

(21) Numéro de dépôt: **14305689.3**

(22) Date de dépôt: **12.05.2014**

(54) **Procede et système de détermination de températures internes d'une machine électrique synchrone au moyens d'observateurs d'état**

Verfahren und System zur Bestimmung der Innentemperaturen einer elektrischen Maschine, die synchron mit den Zustandsbeobachtern läuft

Method and system for determining internal temperatures of a synchronous electric machine by means of status observers

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.05.2013 FR 1354519**

(43) Date de publication de la demande:
**26.11.2014 Bulletin 2014/48**

(73) Titulaire: **IFP Energies nouvelles**
**92500 Rueil-Malmaison (FR)**

(72) Inventeurs:
• **Dib, Wissam**
**92150 Suresnes (FR)**
• **Henwood, Nicolas**
**75013 Paris (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
WO-A2-2009/009232    DE-A1-102007 062 712
US-A1- 2010 276 929    US-A1- 2011 144 843
US-A1- 2013 028 292

**Description**

La présente invention concerne le domaine du contrôle et du diagnostic des machines électriques synchrones, notamment pour véhicules automobiles.

Une machine synchrone se compose d'une partie tournante, le rotor, et d'une partie fixe, le stator. Le rotor peut se composer d'aimants permanents ou être constitué d'un bobinage alimenté en courant continu et d'un circuit magnétique, on parle alors d'électroaimant. Le stator comprend trois phases, sur chacune desquelles est connectée au moins une bobine (appelés aussi enroulements), ces trois bobines sont alimentées en courant et tension. On utilise une force extérieure pour faire tourner le rotor : un champ magnétique induit par un courant électrique alternatif dans des bobines (enroulements) du stator engendre une rotation du rotor. La vitesse de ce champ tournant est appelée « vitesse de synchronisme ».

Pour commander et diagnostiquer de telles machines électriques, il peut être important de connaître les températures internes de la machine électrique. En effet, l'information de la température peut être utilisée par un moyen classique de contrôle vectoriel du couple de la machine. Ainsi, on peut prendre en compte les variations du comportement de la machine électrique lors de l'élévation de la température : par exemple, l'intensité du flux de l'aimant et la résistance des bobines ne sont pas constantes et varient en fonction de la température. On parle de contrôle vectoriel car pour que la machine produise le couple requis par l'application, il faut maintenir les courants électriques y circulant en phase et synchronisés avec la position du rotor. Pour y parvenir, les moyens contrôle de la machine électrique appliquent des tensions aux bornes du moteur, ces tensions étant fournies par un algorithme de contrôle en couple.

Les températures internes à la machine électrique correspondent à la température des bobines et celle de l'aimant (ou de l'électro-aimant) intégré dans le rotor. De plus, on peut également utiliser pour la commande et le diagnostic la température de la carcasse de la machine électrique. On appelle carcasse, les matériaux ferromagnétiques du stator servant de support et incluant les bobines.

Pour déterminer ces températures, on peut utiliser des capteurs de température au sein de la machine électrique. Toutefois, on ne peut pas placer de tels capteurs sur le rotor tournant, on ne peut donc pas connaître la température de l'aimant. De plus, les capteurs permettent uniquement une mesure de la température en surface des bobines ou de la carcasse mais pas la mesure de la température au sein des matériaux. Par ailleurs, une telle instrumentation présente d'autres inconvénients tels qu'une imprécision des mesures, la présence d'un bruit de mesure, un risque de défaillance des capteurs, un coût élevé...

Par ailleurs, des algorithmes ont été développés pour déterminer les températures internes à partir de mesures réalisées sur la machine électrique. Les algorithmes de l'état de l'art reconstruisent soit la température des aimants soit la température du bobinage séparément en les estimant à partir des mesures électriques des grandeurs physiques qui varient avec ces températures. Quoi qu'il en soit, ils peuvent être classés en deux grandes catégories :

- ceux basés sur l'injection de signaux particuliers, qui nécessitent d'appliquer des tensions particulières aux bornes du moteur pour pouvoir extraire les paramètres physiques du moteur liés à sa température interne,
- ceux ne nécessitant aucun signal particulier en entrée du moteur, qui ne se basent que sur une description mathématique de son comportement (estimateur temps réel ou observateur).

De plus, ces solutions ne sont utilisées uniquement pour la surveillance de la machine électrique mais pas pour son contrôle.

Par conséquent, aucune solution matérielle ou algorithmique ne permet de déterminer simultanément et précisément les températures des bobines et de l'aimant.

Pour pallier ces problèmes, l'invention concerne un procédé de détermination des températures internes (températures des bobines et de l'aimant) au moyen d'observateurs d'état de la résistance des bobines et du flux magnétique de l'aimant. Ainsi, on peut déterminer de manière précise la température de tous les composants de la machine électrique. L'invention concerne par ailleurs un procédé de diagnostic, un procédé et un système de commande d'une machine électrique à partir des températures internes déterminées.

Le document WO-A-2009/009232 décrit un procédé dans lequel la résistance des bobines est mesurée.

Le document US 2010/0276927 décrit un système et une méthode pour déterminer la température d'un aimant permanent d'une machine électrique.

**Le procédé selon l'invention**

L'invention concerne un procédé de détermination de températures internes d'une machine électrique synchrone, ladite machine électrique synchrone comprenant un stator constitué de trois phases sur chacune desquelles est connectée au moins une bobine, et un rotor comprenant au moins un aimant, le champ électromagnétique desdites bobines engendrant la rotation dudit rotor, procédé dans lequel on mesure la vitesse $\Omega_m$ dudit rotor ainsi que les tensions

et les courants $u_m$ et $i_m$ desdites phases. Le procédé selon l'invention est défini par la revendication 1.

Selon l'invention, on estime ladite résistance $\hat{R}$ des bobines en mettant en œuvre les étapes suivantes :

i) on détermine les tensions $u_{d,q}$ et les courants $i_{d,q}$ dans le repère de Park par une transformation des tensions $u_m$ et des courants $i_m$ mesurés ;

ii) on estime le courant $\hat{i}_d$ et le courant $\hat{i}_y$ au moyen des équations du type :

$$L_d\dot{\hat{i}}_d = -\hat{R}(T_{cu})\hat{i}_d + p\Omega_m L_q\hat{i}_q + u_d - k_d\left(i_d - \hat{i}_d\right)$$

$$L_q\dot{\hat{i}}_q = -\hat{R}(T_{cu})\hat{i}_q - p\Omega_m\left(L_d\hat{i}_d + \hat{\phi}(T_{ai})\right) + u_q - k_p\left(i_d - \hat{i}_d\right)$$

; et

iii) on estime ladite résistance R des bobines au moyen desdites mesures et desdits courants $\hat{i}_d$ et $\hat{i}_q$ estimés par un observateur d'état de la forme :

$$\dot{\hat{R}}(T_{cu}) = k_r\left(i_d\frac{\left(i_d - \dot{\hat{i}}_d\right)}{L_d} + i_q\frac{\left(i_q - \dot{\hat{i}}_q\right)}{L_q}\right)$$

avec : $L_d$ : inductance directe de ladite machine électrique,
$L_q$ : inductance en quadrature de ladite machine électrique,
$k_d$, $k_r$, $k_p$, $k_\phi$ : variables de calibration,
p : nombre de pairs de pôles de la machine électrique.

Selon l'invention, on estime ladite intensité du flux magnétique $\hat{\phi}$ de l'aimant en mettant en œuvre les étapes suivantes :

i) on détermine les tensions $u_{d,q}$ et les courants $i_{d,q}$ dans le repère de Park par une transformation des tensions $u_m$ et des courants $i_m$ mesurés ;

ii) on estime le courant $\hat{i}_d$ et le courant $\hat{i}_q$ au moyen des équations du type :

$$L_d\dot{\hat{i}}_d = -\hat{R}(T_{cu})\hat{i}_d + p\Omega_m L_q\hat{i}_q + u_d - k_d\left(i_d - \hat{i}_d\right)$$

$$L_q\dot{\hat{i}}_q = -\hat{R}(T_{cu})\hat{i}_q - p\Omega_m\left(L_d\hat{i}_d + \hat{\phi}(T_{ai})\right) + u_q - k_p\left(i_d - \hat{i}_d\right)$$

; et

iii) on estime ladite intensité du flux magnétique $\phi$ de l'aimant au moyen desdites mesures et desdits courants $\hat{i}_d$ et

$$\dot{\hat{\phi}}(T_{ai}) = k_\phi\left(p\Omega_m\frac{\left(i_q - \dot{\hat{i}}_q\right)}{L_q}\right)$$

$\hat{i}_q$ estimés par un observateur d'état de la forme :

avec : $L_d$ : inductance directe de ladite machine électrique,
$L_q$ : inductance en quadrature de ladite machine électrique,
$k_d$, $k_r$, $k_p$, $k_\phi$: variables de calibration,
p : nombre de pairs de pôles de la machine électrique.

Avantageusement, on détermine ladite température $T_{cu}$ desdites bobines au moyen d'une équation de la forme :

$\hat{R} = R_0(1+ \alpha(T_{cu} - T_{ref}))$ avec $R_0$ la résistance de référence desdites bobines pour la température de référence $T_{ref}$, $\alpha$ un paramètre constant de résistance de température desdites bobines.

De manière avantageuse, on détermine ladite température $T_{ai}$ dudit aimant au moyen d'une équation de la forme : $\hat{\phi} = \phi_0(1 + \beta(T_{ai} - T_{ref}))$ avec $\phi_0$ l'intensité du flux magnétique de référence dudit aimant pour la température de référence $T_{ref}$, $\beta$ un paramètre constant de résistance de température dudit aimant.

En outre, le procédé peut comprendre une étape de prétraitement des grandeurs électriques en amont des étapes d'estimation de la résistance des bobines et de l'intensité du flux magnétique de l'aimant.

De préférence, ledit prétraitement d'une grandeur électrique $y$ est réalisé par décomposition d'un signal électrique mesurée $y_m$ en somme de fonctions cosinus et sinus dépendantes de la position mesurée $\theta_m$ du rotor

$$y_m = \sum_{i=1}^{N} \left( a_i \cos(i\theta_m) + b_i \sin(i\theta_m) \right),$$

les coefficients $a_i, b_i$ étant déterminés par identification, puis par conservation du terme prépondérant : $y_f = a_1 \cos(\theta_m) + b_1 \sin(\theta_m)$.

Selon un mode de réalisation de l'invention, on détermine une température $T_{fer}$ de la carcasse de ladite machine électrique au moyen desdites températures $T_{cu}$ des bobines et $T_{ai}$ de l'aimant et de pertes énergétiques de ladite machine électrique.

De préférence, on détermine ladite température $T_{fer}$ de ladite carcasse au moyen d'une formule du type :

$$\dot{\hat{T}} = AT + KC\left(\hat{T} - T\right) + BP$$

avec $T = (T_{fer}, T_{cu}, T_{ai})$, $P = (P_{fer}, P_{joules}, P_m)$, $P_{fer}$ correspondant aux pertes fer de ladite machine électrique, $P_{joules}$ aux pertes joules de ladite machine électrique, $P_m$ les pertes mécaniques de ladite

$$B = \begin{bmatrix} 1 \\ 1 \\ 1 \end{bmatrix}$$

machine électrique, $K$ étant un gain, A une matrice constante du modèle thermique, et $C = [0\ 1\ 1]$.

L'invention concerne également un procédé de diagnostic d'une machine électrique synchrone, pour lequel on réalise les étapes suivantes :

- on détermine lesdites températures internes de ladite machine électrique selon le procédé décrit ci-dessus ; et
- on diagnostique une surchauffe de ladite machine synchrone en fonction desdites températures déterminées.

En outre, l'invention concerne un procédé de commande d'une machine électrique synchrone, pour lequel on réalise les étapes suivantes :

- on détermine lesdites températures internes de ladite machine électrique le procédé décrit ci-dessus ; et
- on commande le couple de ladite machine synchrone en fonction desdites températures déterminées.

L'invention concerne aussi un système de commande d'une machine électrique synchrone, apte à appliquer le procédé de commande tel que décrit précédemment.

L'invention porte également sur un véhicule automobile comprenant au moins une machine électrique synchrone, le véhicule comprend en outre un système de commande tel que décrit précédemment.

**Présentation succincte des figures**

D'autres caractéristiques et avantages du procédé selon l'invention, apparaîtront à la lecture de la description ci-après d'exemples non limitatifs de réalisations, en se référant aux figures annexées et décrites ci-après.

La figure 1 illustre le contrôle d'une machine électrique synchrone selon l'invention.
La figure 2 est un logigramme du procédé selon l'invention.
La figure 3 illustre un mode de réalisation de l'étape de détermination des températures au moyen d'observateurs d'état.

**Description détaillée de l'invention**

On rappelle que le procédé selon l'invention est adapté à une machine électrique synchrone. Une telle machine est composée d'une partie tournante le rotor, et d'une partie fixe le stator. La partie tournante comprend au moins un aimant (ou un électroaimant). Le stator comprend au moins trois bobines réparties sur trois phases, ces bobines (généralement en cuivre) sont alimentés alternativement de manière à générer un champ magnétique apte à faire tourner le rotor. Les bobines sont supportées par une carcasse, généralement en fer, et également appelé carter.

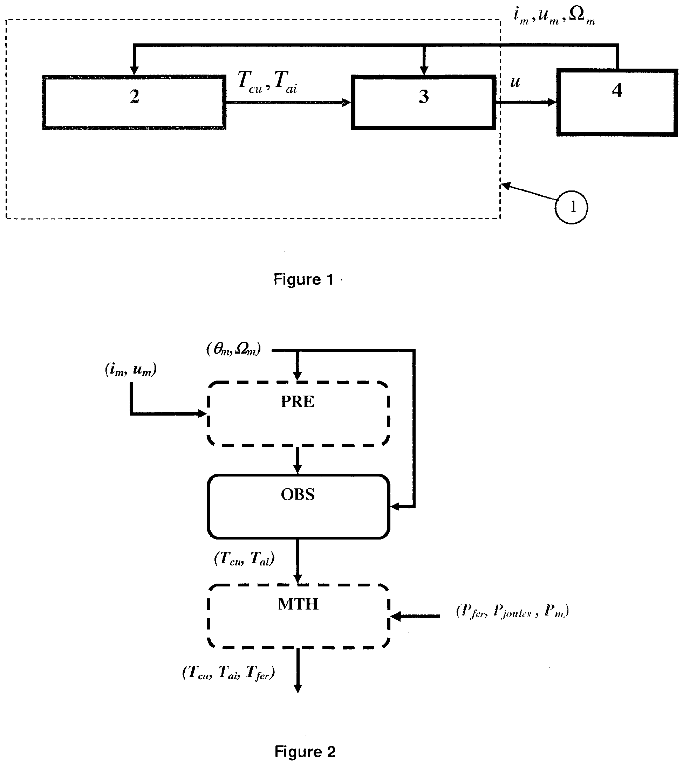

La figure 1 illustre le contrôle d'une machine électrique synchrone, constituée classiquement de trois phases. Cette machine peut être du type à aimants permanents, à excitation commandée ou à double excitation. La machine électrique (4) est pourvue d'au moins un moyen de mesure de la position et/ou de vitesse du rotor et de moyens de mesure des courants et des tensions des phases, ces moyens de mesure ne sont pas représentés. Les moyens de contrôle (1) de la machine électrique sont constitués de moyens de détermination (2) des températures internes (températures des bobines, de l'aimant, et éventuellement de la carcasse) de la machine électrique (4) et de moyens de contrôle du couple (3) de la machine électrique (4). Les moyens de détermination (2) des températures internes déterminent les températures à partir des mesures de la vitesse $\Omega_m$ du rotor, et à partir des mesures de courants $i_m$ et de tensions $u_m$. Il s'agit des courants et des tensions de chacune des trois phases de la machine électrique (4). Les moyens de contrôle du couple (3) appliquent des tensions aux bornes du moteur en fonction des températures internes, de la vitesse $\Omega_{rot}$ et de courants $i_m$ et de tensions $u_m$ afin d'assurer une consigne de couple pour la machine électrique (4).

Notations :

Au cours de la description, les notations suivantes seront utilisées :

$u$ : tensions aux bornes des phases de la machine électrique.

$i$ : courants circulant dans les phases de la machine électrique.

$\theta$ : position du rotor, correspondant à l'angle de rotation du rotor de la machine électrique par rapport au stator.

$\Omega$ : vitesse du rotor, correspondant à la vitesse de rotation du rotor de la machine électrique par rapport au stator.

$T_{cu}$ : température des bobines de la machine électrique.

$T_{ai}$ : température de l'aimant du rotor de la machine électrique.

$T_{fer}$ : température de la carcasse de la machine électrique.

T : vecteur des températures de dimension trois, tel que $T = (T_{fer}, T_{cu}, T_{ai})$

$T_{ref}$ : température de référence, en général 20 °C.

$\phi$ : intensité du flux magnétique de l'aimant du rotor, variable en fonction de la température des bobines $T_{cu}$.

$\phi_0$ : intensité du flux de référence à la température de référence $T_{ref}$, il s'agit d'une donnée constructeur.

R : résistance des bobines de la machine électrique, variable en fonction de la température de l'aimant $T_{ai}$.

$R_0$ : résistance des bobines de référence à la température de référence $T_{ref}$, il s'agit d'une donnée constructeur.

$L_d$ : inductance directe de ladite machine électrique, il s'agit d'un paramètre de la machine électrique qui est connu (donnée constructeur ou obtenu expérimentalement).

$L_q$ : inductance en quadrature de ladite machine électrique, il s'agit d'un paramètre de la machine électrique qui est connu (donnée constructeur ou obtenu expérimentalement).

$P_{joules}$ : pertes énergétiques dans la machine électrique dues à l'effet Joule, il s'agit d'une donnée constructeur pouvant être donnée sous forme d'une cartographie fonction du couple et du régime de la machine électrique.

$P_{fer}$ : pertes énergétiques dans la carcasse de la machine électrique, il s'agit d'une donnée constructeur pouvant être donnée sous forme d'une cartographie fonction du couple et du régime de la machine électrique.

$P_m$ : pertes énergétiques mécaniques dans la machine électrique, il s'agit d'une donnée constructeur pouvant être donnée sous forme d'une cartographie fonction du couple et du régime de la machine électrique.

P : vecteur des pertes de dimension trois, tel que $P = (P_{fer}, P_{joules}, P_m)$

$p$ : nombre de pairs de pôles de la machine électrique.

$\alpha$ : paramètre constant de résistance de température desdites bobines, dépendant de la résistivité du matériau des bobines.

$\beta$ : paramètre constant de résistance de température dudit aimant, dépendant de l'aimant.

$k_d, k_q, k_r, k_\phi$ : variables de calibration permettant de gérer la convergence des observateurs d'état.

K : gain de calibration pour le modèle thermique.

A : matrice constante du modèle thermique.

$$B = \begin{bmatrix} 1 \\ 1 \\ 1 \end{bmatrix}.$$

B : vecteur colonne constant,

C: vecteur ligne constant, $C$ = [0 1 1].

Ces notations, indexées par la mention $_{-m}$, représentent les valeurs mesurées. Les valeurs estimées sont indiquées par un accent circonflexe. Les dérivées par rapport au temps sont indiquées par un point. Les notations indexées par la mention $_{-d}$ ou $_{-q}$ signifient que les grandeurs sont exprimées dans le repère de Park.

L'invention permet de terminer les températures internes d'une machine électrique. La figure 2 décrit les différentes étapes du procédé selon l'invention :

1) prétraitement des grandeurs électriques (PRE)
2) estimation des températures des bobines et de l'aimant (OBS)
3) estimation de la température de la carcasse (MTH)

Les étapes de prétraitement des grandeurs électriques (PRE) et d'estimation de la température de la carcasse (MTH) sont des étapes facultatives.

Préalablement à ces étapes, on mesure les courants $i$ et tensions $u$ dans les phases de la machine électrique ainsi que la position $\theta$ et la vitesse du rotor $\Omega$.

Selon l'invention, la détermination de la position $\theta$ et de la vitesse $\Omega$ du rotor utilise des valeurs mesurées. Pour effectuer ces mesures, on peut utiliser tout type de capteur, notamment un capteur de position à bas coût, afin de limiter les coûts de l'installation. Il peut s'agir notamment d'un capteur à effet Hall ou d'un capteur inductif. Un seul capteur de position peut être utilisé, la vitesse de rotation pouvant se déduire de la position. Alternativement, on peut utiliser des algorithmes d'estimation pour déterminer ces grandeurs. Un exemple d'un tel algorithme est décrit notamment dans la demande de brevet FR dont le numéro de dépôt est 11/03994.

La machine électrique synchrone est commandée en couple par un contrôle des tensions et des courants d'alimentation des phases de la machine électrique synchrone. Afin de piloter de manière optimale ce moteur il est nécessaire de mesurer les tensions $u_m$ aux bornes des phases et les courants $i_m$ y circulant au moyen de capteurs de tension et de courant.

## 1) prétraitement des grandeurs électriques (PRE)

Les mesures des grandeurs électriques comportent généralement du bruit de mesure, ce qui engendre des imprécisions pour l'estimation des différentes températures internes. Pour palier ce problème, une étape de prétraitement (PRE) des grandeurs électriques (illustré en pointillés en figure 2) peut être réalisée en amont de l'étape d'estimation des températures (OBS). Ce prétraitement permet de filtrer les grandeurs mesurées et par conséquent d'améliorer la qualité de l'estimation des températures internes.

Selon un mode de réalisation de l'invention, le prétraitement d'une grandeur électrique $y$ (tension ou courant) est réalisé par décomposition du signal électrique mesurée $y_m$ en somme de fonctions cosinus et sinus dépendantes

$$y_m = \sum_{i=1}^{N} \left( a_i \cos(i\theta_m) + b_i \sin(i\theta_m) \right),$$

de la position mesurée : les coefficients $a_i$, $b_i$ étant déterminés par identification. On constate en pratique que N = 3 ou N = 4 permet de réaliser un traitement correct des données mesurées. Ensuite, on conserve uniquement le terme prépondérant (N=1) : $y_f = a_1 \cos(\theta_m) + b_1 \sin(\theta_m)$. La grandeur prétraitée est alors utilisée pour les observateurs d'état définis par la suite.

## 2) estimation des températures des bobines et de l'aimant (OBS)

L'estimation (OBS) de la température des enroulements et des aimants est mise en œuvre à partir des mesures (prétraitées le cas échéant) au moyen de deux observateurs d'état : la résistance R des bobines et le flux magnétique $\phi$ de l'aimant.

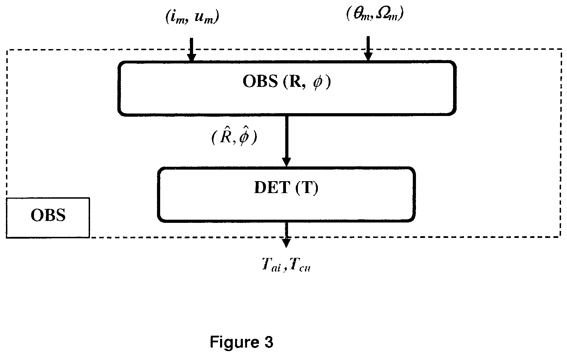

Selon un mode de réalisation de l'invention, cette étape peut comporter deux parties indissociables, illustrées sur la figure 3, qui sont les suivantes :

- estimation de l'intensité du flux magnétique des aimants de la machine et de la résistance des bobines (OBS (R, $\phi$)) et
- reconstruction des températures (DET(T)) à partir du flux magnétique et de la résistance estimés.

Pour cette étape, on se place dans le repère de Park, pour cela, on transforme les grandeurs électriques triphasées en grandeurs en deux dimensions, notées d et q, pour respectivement direct et en quadrature. En effet, la transformée de Park est un outil mathématique utilisé en électrotechnique afin de réaliser un changement de repère dans un système d'axe diphasé ou triphasé. Elle est généralement utilisée pour passer d'un repère « fixe » lié au stator d'une machine électrique à un repère tournant lié à son rotor ou au champ magnétique.

Pour construire les observateurs d'état selon l'invention, on se base sur une représentation d'état des moteurs synchrones du type :

$$L_d \dot{i}_d = -R(T_{cu})i_d + p\Omega_m L_q i_q + u_d$$

$$L_q \dot{i}_q = -R(T_{cu})i_q - p\Omega_m (L_d i_d + \phi(T_{ai})) + u_q$$

Le flux $\phi$ et la résistance R ne sont pas mesurables et sont variables en fonction de la température de fonctionnement de la machine électrique.

On peut alors concevoir un observateur qui calcule en temps réel une estimation ($\hat{i}_d$, $\hat{i}_q$) des courants ($i_d$, $i_q$) du type :

$$L_d \dot{\hat{i}}_d = -\hat{R}(T_{cu})\hat{i}_d + p\Omega_m L_q \hat{i}_q + u_d - k_d (i_d - \hat{i}_d)$$

$$L_q \dot{\hat{i}}_q = -\hat{R}(T_{cu})\hat{i}_q - p\Omega_m (L_d \hat{i}_d + \hat{\phi}(T_{ai})) + u_q - k_p (i_d - \hat{i}_d)$$

où $\hat{R}$ et $\hat{\phi}$ sont des estimations de la résistance des enroulements et du flux de l'aimant. Ces grandeurs peuvent être calculées en tant réel par des observateurs d'état du type :

$$\dot{\hat{R}}(T_{cu}) = k_r \left( i_d \frac{(i_d - \dot{\hat{i}}_d)}{L_d} + i_q \frac{(i_q - \dot{\hat{i}}_q)}{L_q} \right)$$

$$\dot{\hat{\phi}}(T_{ai}) = k_\phi \left( p\Omega_m \frac{(i_q - \dot{\hat{i}}_q)}{L_q} \right)$$

Pour ces formules, $k_d$, $k_r$, $k_p$, $k_\phi$ sont des variables de calibration qui permettent de gérer la vitesse de convergence des observateurs d'état.

A partir des équations précédentes, on peut estimer la résistance $\hat{R}$ et le flux magnétique $\hat{\phi}$ qui converge vers les vraies valeurs de $R(T_{cu})$ et $\phi(T_{ai})$. On peut alors ensuite reconstruire les différentes températures en inversant les équations suivantes à partir des valeurs estimées par les observateurs d'état :

$$\hat{R} = R_0 (1 + \alpha(T_{cu} - T_{ref}))$$

$$\hat{\phi} = \phi_0 (1 + \beta(T_{ai} - T_{ref}))$$

Dans ces équations, $\phi_0$ correspond à l'intensité du flux de référence à la température de référence $T_{ref}$ (choisie en général à 20 °C), il s'agit d'une donnée constructeur, $R_0$ correspond à la résistance des bobines de référence à la température de référence $T_{ref}$, il s'agit également d'une donnée constructeur, $\alpha$ et $\beta$ sont les coefficients de résistance de température du cuivre (bobines) et de l'aimant, ces coefficients sont constants et dépendent de la résistivité des matériaux.

Ainsi, aux moyens de deux observateurs d'état (de la résistance des bobines et du flux magnétique de l'aimant) on peut déterminer deux températures internes de la machine électrique que sont les températures des bobines $T_{cu}$ et de l'aimant $T_{ai}$.

3) estimation de la température de la carcasse (MTH)

Selon l'invention, on peut également estimer la température de la carcasse de la machine électrique. Cette estimation peut être mise en œuvre à partir des températures des bobines $T_{cu}$ et de l'aimant $T_{ai}$ en prenant compte des différentes pertes énergétiques dans la machine électrique.

Selon un mode de réalisation de l'invention, la température de la carcasse peut être déterminée au moyen d'un deuxième observateur, basé sur un modèle thermique (MTH) de la machine électrique et sur les observations des températures réalisées lors de l'étape précédente.

La représentation thermique des machines synchrones peut s'écrire de la façon suivante :

$$\dot{T} = AT + BP$$

$$y = CT = \left( T_{cu}, T_{ai} \right)$$

$$B = \begin{bmatrix} 1 \\ 1 \\ 1 \end{bmatrix}$$

Avec A une matrice constante du modèle thermique, et $C = [0\ 1\ 1]$.

La matrice A peut être obtenue par identification à partir d'un modèle thermique complexe. Ce dernier étant complexe ne peut pas être utilisé en ligne dans le système de contrôle. L'idée est de construire un modèle réduit ($T = A\ T + BP$) exploitable en ligne à partir d'un modèle complexe, en identifiant A. Ce modèle réduit ($T = A\ T + BP$) est par la suite utilisé pour estimer la température du fer.

On conçoit un observateur qui calcule en temps réel une estimation de la température de la carcasse $T_{fer}$ (fer existant dans le stator, servant de support et incluant le bobinage), avec une équation du type :

$$\dot{\hat{T}} = AT + KC\left( \hat{T} - T \right) + BP$$

Le gain K permet de gérer la vitesse de convergence de la température estimée $\hat{T}$ à la valeur réelle T.

Toutes les étapes du procédé peuvent être exécutées par des moyens informatiques, notamment par un contrôleur de la machine électrique. Ainsi, on peut déterminer en temps réel les différentes températures internes de la machine électrique.

En outre, l'invention concerne un procédé de diagnostic d'une machine électrique synchrone, pour lequel on réalise les étapes suivantes :

- on détermine lesdites températures internes (températures des bobines, de l'aimant et éventuellement de la carcasse) de ladite machine électrique à l'aide du procédé décrit ci-dessus ; et
- on diagnostique une surchauffe. de la machine électrique ou de l'un de ces composants (bobines, aimant, carcasse) en fonction des températures déterminées, par exemple lorsque les températures déterminées sont supérieures à des seuils définis par le constructeur et/ou l'utilisateur.

L'invention concerne également un procédé de commande d'une machine électrique synchrone, pour lequel on réalise les étapes suivantes :

- on détermine lesdites températures internes (températures des bobines, de l'aimant et éventuellement de la carcasse) de ladite machine électrique à l'aide du procédé décrit ci-dessus ; et
- on contrôle le couple de ladite machine synchrone en fonction desdites températures déterminées. Pour cette étape, on peut utiliser tout moyen classique de contrôle vectoriel du couple de la machine électrique, qui prend en en compte en plus des températures, les tensions et courants mesurés ainsi que les mesures de position et vitesse du rotor. La prise en compte de la température pour la commande de la machine électrique permet de déterminer précisément le comportement de la machine électrique, ce qui permet de réaliser une commande adaptée à son fonctionnement.

En outre, l'invention concerne un système de commande d'une machine électrique synchrone adapté à appliquer le procédé tel que décrit ci-dessus. Un tel système de commande (1) de machine électrique (4) est illustré en figure 1. Les moyens de contrôle (1) de la machine électrique sont constitués de moyens de détermination (2) des températures internes (températures des bobines, de l'aimant, et éventuellement de la carcasse) de la machine électrique (4) et de moyens de contrôle du couple (3) de la machine électrique (4). Les moyens de détermination (2) des températures internes déterminent les températures à partir des mesures de la vitesse $\Omega_m$ du rotor, et à partir des mesures de courants $i_m$ et de tensions $u_m$. Il s'agit des courants et des tensions de chacune des trois phases de la machine électrique (4). Les moyens de contrôle du couple (3) appliquent des tensions aux bornes du moteur en fonction des températures internes, de la vitesse $\Omega_{rot}$ et de courants $i_m$ et de tensions $u_m$ afin d'assurer une consigne de couple pour la machine électrique (4).

Ce système de commande, peut être utilisé pour une machine électrique synchrone embarquée à bord d'un véhicule, notamment à bord d'un véhicule automobile électrique ou hybride. Toutefois, le système de commande décrit n'est pas limité à cette application et convient pour toutes les applications des machines électriques synchrones.

## Revendications

1.  Procédé de détermination de températures internes d'une machine électrique synchrone (4), ladite machine électrique synchrone (4) comprenant un stator constitué de trois phases sur chacune desquelles est connectée au moins une bobine, et un rotor comprenant au moins un aimant, le champ électromagnétique desdites bobines engendrant la rotation dudit rotor, procédé dans lequel on mesure la vitesse $\Omega_m$ dudit rotor ainsi que les tensions et les courants $u_m$ et $i_m$ desdites phases, **caractérisé en ce qu'**on réalise les étapes suivantes :

    a) on estime une résistance $\hat{R}$ desdites bobines à l'aide d'un observateur d'état R de la résistance des bobines à partir desdites mesures, ladite résistance étant dépendante de la température desdites bobines $T_{cu}$ ;
    b) on estime une intensité du flux magnétique $\hat{\phi}$ dudit aimant à l'aide d'un observateur d'état $\hat{\phi}$ de l'intensité du flux magnétique de l'aimant à partir desdites mesures, ladite intensité du flux magnétique étant dépendante de la température de l'aimant $T_{ai}$ ;
    c) on détermine les tensions $u_{d,q}$ et les courants $i_{d,q}$ dans le repère de Park par une transformation des tensions $u_m$ et des courants $i_m$ mesurés ;
    d) on conçoit un observateur qui calcule en temps réel une estimation $(\hat{i}_d, \hat{i}_q)$ des courants $(i_d, i_q)$ du type :

$$L_d \dot{\hat{i}}_d = -\hat{R}(T_{cu})\hat{i}_d + p\Omega_m L_q \hat{i}_q + u_d - k_d\left(i_d - \hat{i}_d\right)$$

$$L_q \dot{\hat{i}}_q = -\hat{R}(T_{cu})\hat{i}_q - p\Omega_m\left(L_d \hat{i}_d + \hat{\phi}(T_{ai})\right) + u_q - k_p\left(i_d - \hat{i}_d\right)$$

    où $\hat{R}$ et $\hat{\phi}$ sont des estimations de la résistance des enroulements et du flux de l'aimant et $L_d$ : inductance directe de ladite machine électrique,
    $L_d$ : inductance en quadrature de ladite machine électrique,
    $k_d$, $k_p$ : variables de calibration,
    p : nombre de pairs de pôles de la machine électrique.

    e) on détermine une température $T_{cu}$ desdites bobines au moyen de ladite estimation de la résistance $\hat{R}$ des bobines ladite résistance $\hat{R}$ étant estimée au moyen desdits courants $\hat{i}_j$ et $\hat{i}_q$, estimés, et
    f) on détermine une température $T_{ai}$ dudit aimant au moyen de ladite estimation de l'intensité du flux magnétique $\hat{\phi}$ de l'aimant ledite flux magnétique $\hat{\phi}$ étant au moyen desdits courants $\hat{i}_j$ et $\hat{i}_q$ estimés.

2.  Procédé selon la revendication 1, dans lequel on estime ladite résistance $\hat{R}$ des bobines au moyen desdites mesures

et desdits courants $\hat{i}_d$ et $\hat{i}_q$ estimés par un observateur d'état de la forme :

$$\hat{\dot{R}}(T_{cu}) = k_r\left( i_d \frac{\left(i_d - \hat{\dot{i}}_d\right)}{L_d} + i_q \frac{\left(i_q - \hat{\dot{i}}_q\right)}{L_q} \right)$$

avec : $k_r$, $k_\phi$ : variables de calibration,

3. Procédé selon l'une des revendications précédentes, dans lequel on estime ladite intensité du flux magnétique $\hat{\phi}$ de l'aimant au moyen desdites mesures et desdits courants $\hat{i}_d$ et $\hat{i}_q$ estimés par un observateur d'état de la forme:

$$\hat{\dot{\phi}}(T_{ai}) = k_\phi\left( p\Omega_m \frac{\left(i_q - \hat{\dot{i}}_q\right)}{L_q} \right)$$

avec: $k_r$, $k_\phi$ : variables de calibration,

4. Procédé selon l'une des revendications précédentes, dans lequel on détermine ladite température $T_{cu}$ desdites bobines au moyen d'une équation de la forme : $\hat{R} = R_0(1 + \alpha(T_{cu} - T_{ref}))$ avec $R_0$ la résistance de référence desdites bobines pour la température de référence $T_{ref}$, $\alpha$ un paramètre constant de résistance de température desdites bobines.

5. Procédé selon l'une des revendications précédentes, dans lequel on détermine ladite température $T_{ai}$ dudit aimant au moyen d'une équation de la forme : $\hat{\phi} = \phi_0 (1 + \beta(T_{ai} - T_{ref}))$ avec $\phi_0$ l'intensité du flux magnétique de référence dudit aimant pour la température de référence $T_{ref}$, $\beta$ un paramètre constant de résistance de température dudit aimant.

6. Procédé selon l'une des revendications précédentes, dans lequel le procédé comprend une étape de prétraitement des grandeurs électriques en amont des étapes d'estimation de la résistance des bobines et de l'intensité du flux magnétique de l'aimant.

7. Procédé selon la revendication 6, dans lequel ledit prétraitement d'une grandeur électrique $y$ est réalisé par décomposition d'un signal électrique mesurée $y_m$ en somme de fonctions cosinus et sinus dépendantes de la position

$$y_m = \sum_{i=1}^{N} \left(a_i \cos\left(i\theta_m\right) + b_i \sin\left(i\theta_m\right)\right),$$

mesurée $\theta_m$ du rotor les coefficients $a_i, b_i$ étant déterminés par identification, puis par conservation du terme prépondérant : $y_f = a_1\cos(\theta_m) + b_1 \sin(\theta_m)$.

8. Procédé selon l'une des revendications précédentes, dans lequel on détermine une température $T_{fer}$ de la carcasse de ladite machine électrique au moyen desdites températures $T_{cu}$ des bobines et $T_{ai}$ de l'aimant et de pertes énergétiques de ladite machine électrique.

9. Procédé selon la revendication 8, dans lequel on détermine ladite température $T_{fer}$ de ladite carcasse au moyen d'une formule du type : $\dot{\hat{T}} = AT + KC(\hat{T} - T) + BP$ avec $T = (T_{fer}, T_{cu}, T_{ai})$, $P = (P_{fer}, P_{joules}, P_m)$, $P_{fer}$ correspondant aux pertes fer de ladite machine électrique, $P_{joules}$ aux pertes joules de ladite machine électrique, $P_m$ les pertes mécaniques de ladite machine électrique, $K$ étant un gain, A une matrice constante du modèle thermique,

$$B = \begin{bmatrix} 1 \\ 1 \\ 1 \end{bmatrix}$$ et C = [0 1 1].

**10.** Procédé de diagnostic d'une machine électrique synchrone, **caractérisé en ce qu'**on réalise les étapes suivantes :

- on détermine lesdites températures internes de ladite machine électrique selon l'une des revendications précédentes ; et
- on diagnostique une surchauffe de ladite machine synchrone en fonction desdites températures déterminées.

**11.** Procédé de commande d'une machine électrique synchrone, **caractérisé en ce qu'**on réalise les étapes suivantes :

- on détermine lesdites températures internes de ladite machine électrique selon l'une des revendications 1 à 9 ; et
- on commande le couple de ladite machine synchrone en fonction desdites températures déterminées.

**12.** Système de commande (1) d'une machine électrique synchrone, **caractérisé en ce qu'**il est apte à appliquer le procédé de commande selon la revendication 11.

**13.** Véhicule automobile comprenant au moins une machine électrique synchrone (4), **caractérisé en ce qu'**il comprend en outre un système de commande (1) selon la revendication 12.

**Patentansprüche**

**1.** Verfahren zur Bestimmung von Innentemperaturen einer elektrischen Synchronmaschine (4), wobei die elektrische Synchronmaschine (4) einen Ständer umfasst, der aus drei Phasen besteht, an die jeweils mindestens eine Wicklung angeschlossen ist, und einen Läufer, der mindestens einen Magneten umfasst, wobei das elektromagnetische Feld der Wicklungen das Drehen des Läufers bewirkt, wobei man bei dem Verfahren die Geschwindigkeit $\Omega_m$ des Rotors sowie die Spannungen und die Ströme $u_m$ und $i_m$ der Phasen misst, **dadurch gekennzeichnet, dass** man die folgenden Schritte ausführt:

a) man schätzt einen Widerstand $\hat{R}$ der Wicklungen mithilfe eines Zustandsbeobachters $\hat{R}$ des Widerstands der Wicklungen ausgehend von den Messungen, wobei der Widerstand von der Temperatur der Wicklungen $T_{cu}$ abhängig ist;
b) man schätzt eine Intensität des magnetischen Flusses $\hat{\phi}$ des Magneten mithilfe eines Zustandsbeobachters $\hat{\phi}$ der Intensität des magnetischen Flusses des Magneten ausgehend von den Messungen, wobei die Intensität des magnetischen Flusses von der Temperatur des Magneten $T_{ai}$ abhängig ist;
c) man bestimmt die Spannungen $u_{d,q}$ und die Ströme $i_{d,q}$ im Park-Bezugssystem durch eine Transformation der gemessenen Spannungen $u_m$ und Ströme $i_m$;
d) man konzipiert einen Beobachter, der in Echtzeit eine Schätzung $(\hat{i}_d, \hat{i}_q)$ der Ströme $(i_d, i_q)$ des folgenden Typs berechnet:

$$L_d \dot{\hat{i}}_d = -\hat{R}(T_{cu})\hat{i}_d + p\Omega_m L_q \hat{i}_q + u_d - k_d\left(i_d - \hat{i}_d\right)$$

$$L_q \dot{\hat{i}}_q = -\hat{R}(T_{cu})\hat{i}_q - p\Omega_m\left(L_d \hat{i}_d + \hat{\phi}(T_{ai})\right) + u_q - k_p\left(i_d - \hat{i}_d\right)$$

worin $\hat{R}$ und $\hat{\phi}$ Schätzungen des Widerstands der Wicklungen und des Flusses des Magneten sind und
$L_d$: Induktivität der elektrischen Maschine in Längsachse,
$L_q$: Induktivität der elektrischen Maschine in Querachse,
$k_d$, $k_p$: Kalibrierungsvariablen,

p: Polpaarzahl der elektrischen Maschine;

e) man bestimmt eine Temperatur $T_{cu}$ der Wicklungen mittels der Schätzung des Widerstands $\hat{R}$ der Wicklungen, wobei der Widerstand $\hat{R}$ mittels der geschätzten Ströme $\hat{i}_d$ und $\hat{i}_q$ geschätzt wird, und

f) man bestimmt eine Temperatur $T_{ai}$ des Magneten mittels der Schätzung der Intensität des magnetischen Flusses $\hat{\phi}$ des Magneten, wobei der magnetische Fluss $\hat{\phi}$ mittels der geschätzten Ströme $\hat{i}_d$ und $\hat{i}_q$ geschätzt wird.

2. Verfahren nach Anspruch 1, bei dem man den Widerstand $\hat{R}$ der Wicklungen mittels der Messungen und der Ströme $\hat{i}_d$ und $\hat{i}_q$ schätzt, die von einem Zustandsbeobachter der folgenden Form geschätzt werden:

$$\hat{R}(T_{cu}) = k_r \left( i_d \frac{(i_d - \hat{\dot{i}}_d)}{L_d} + i_q \frac{(i_q - \hat{\dot{i}}_q)}{L_q} \right)$$

mit: $k_r$, $k_\phi$: Kalibrierungsvariablen.

3. Verfahren nach einem der vorhergehenden Ansprüche, bei dem man die Intensität des magnetischen Flusses $\hat{\phi}$ des Magneten mittels der Messungen und der Ströme $\hat{i}_d$ und $\hat{i}_q$ schätzt, die von einem Zustandsbeobachter der folgenden Form geschätzt werden:

$$\hat{\phi}(T_{ai}) = k_\phi \left( p\Omega_m \frac{(i_q - \hat{\dot{i}}_q)}{L_q} \right)$$

mit: $k_r$, $k_\phi$: Kalibrierungsvariablen.

4. Verfahren nach einem der vorhergehenden Ansprüche, bei dem man die Temperatur $T_{cu}$ der Wicklungen mittels einer Gleichung der folgenden Form bestimmt: $\hat{R} = R_0(1+\alpha(T_{cu} - T_{ref}))$, worin $R_0$ der Referenzwiderstand der Wicklungen für die Referenztemperatur $T_{ref}$ ist und $\alpha$ ein konstanter Temperaturwiderstandsparameter der Wicklungen ist.

5. Verfahren nach einem der vorhergehenden Ansprüche, bei dem man die Temperatur $T_{ai}$ des Magneten mittels einer Gleichung der folgenden Form bestimmt: $\hat{\phi} = \phi_0(1 + \beta(T_{ai} - T_{ref}))$, worin $\phi_0$ die Intensität des magnetischen Referenzflusses des Magneten für die Referenztemperatur $T_{ref}$ ist und $\beta$ ein konstanter Temperaturwiderstandsparameter des Magneten ist.

6. Verfahren nach einem der vorhergehenden Ansprüche, wobei das Verfahren einen Schritt zur Vorverarbeitung der elektrischen Größen im Vorfeld der Schritte des Schätzens des Widerstands der Wicklungen und der Intensität des magnetischen Flusses des Magneten umfasst.

7. Verfahren nach Anspruch 6, bei dem die Vorverarbeitung einer elektrischen Größe $y$ durch Zerlegen eines gemessenen elektrischen $y_m$ in eine Summe von Cosinus- und Sinusfunktionen ausgeführt wird, die von der gemessenen

$$y_m = \sum_{i=1}^{N} (a_i \cos(i\theta_m) + b_i \sin(i\theta_m)),$$

Position $\theta_m$ des Läufers abhängig sind, wobei die Koeffizienten $a_i, b_i$ durch Identifizierung, dann durch Beibehaltung des überwiegenden Terms bestimmt werden:

$$y_f = a_1 \cos(\theta_m) + b_1 \sin(\theta_m).$$

8. Verfahren nach einem der vorhergehenden Ansprüche, bei dem man eine Temperatur $T_{fer}$ des Gehäuses der elektrischen Maschine mittels der Temperaturen $T_{cu}$ der Wicklungen und $T_{ai}$ des Magneten und von energetischen Verlusten der elektrischen Maschine bestimmt.

9. Verfahren nach Anspruch 8, bei dem man die Temperatur $T_{fer}$ des Gehäuses mittels einer Formel des folgenden

$$\dot{\hat{T}} = A T + K C (\hat{T} - T) + B P$$

Typs bestimmt: mit $T = (T_{fer}, T_{cu}, T_{ai})$, $= (P_{fer}, P_{joules}, P_m)$, wobei $P_{fer}$ den Eisenverlusten der elektrischen Maschine, $P_{joules}$ den Wärmeverlusten der elektrischen Maschine, $P_m$ den mechanischen Verlusten der elektrischen Maschine entspricht, $K$ ein Verstärkungsfaktor ist, $A$ eine konstante Matrix des thermischen Modells ist,

$$B = \begin{bmatrix} 1 \\ 1 \\ 1 \end{bmatrix} \text{ und } C = \begin{bmatrix} 0 & 1 & 1 \end{bmatrix}.$$

**10.** Diagnoseverfahren für eine elektrische Synchronmaschine, **dadurch gekennzeichnet, dass** man die folgenden Schritte ausführt:

- man bestimmt die Innentemperaturen der elektrischen Maschine nach einem der vorhergehenden Ansprüche; und
- man diagnostiziert eine Überhitzung der Synchronmaschine in Abhängigkeit von den bestimmten Temperaturen.

**11.** Steuerungsverfahren für eine elektrische Synchronmaschine, **dadurch gekennzeichnet, dass** man die folgenden Schritte ausführt:

- man bestimmt die Innentemperaturen der elektrischen Maschine nach einem der Ansprüche 1 bis 9; und
- man steuert das Drehmoment der Synchronmaschine in Abhängigkeit von den bestimmten Temperaturen.

**12.** Steuerungssystem (1) für eine elektrische Synchronmaschine, **dadurch gekennzeichnet, dass** es geeignet ist, das Steuerungsverfahren nach Anspruch 11 anzuwenden.

**13.** Kraftfahrzeug mit mindestens einer elektrischen Synchronmaschine (4), **dadurch gekennzeichnet, dass** es ferner ein Steuerungssystem (1) nach Anspruch 12 umfasst.

**Claims**

**1.** A method of determining internal temperatures in a synchronous electric machine (4), said synchronous electric machine (4) comprising a stator consisting of three phases on each one of which at least one coil is connected, and a rotor comprising at least one magnet, the electromagnetic field of said coils causing rotation of said rotor, a method wherein speed $\Omega_m$ of said rotor, as well as voltages and currents $u_m$ and $i_m$ of said phases are measured, **characterized in that** the following stages are carried out:

a) estimating a resistance $\hat{R}$ for said coils by means of a state observer of the resistance $\hat{R}$ of the coils from said measurements, said resistance depending on the temperature $T_{cu}$ of said coils,
b) estimating an intensity of the magnetic flux $\phi$ of said magnet by means of a state observer for the intensity $\hat{\phi}$ of the magnetic flux of the magnet from said measurements, said magnetic flux intensity depending on the temperature $T_{ai}$ of the magnet,
c) determining voltages $u_{d,q}$ and currents $i_{d,q}$ in Park's reference frame through transformation of the measured voltages $u_m$ and currents $i_m$,
d) designing an observer which calculates, in real time, an estimation $(\hat{i}_d, \hat{i}_q)$ of the currents $(i_d, i_q)$ of the type as follows:

$$L_d \dot{\hat{i}}_d = -\hat{R}(T_{cu})\hat{i}_d + p\Omega_m L_q \hat{i}_q + u_d - k_d (i_d - \hat{i}_d)$$

$$L_q \dot{\hat{i}}_q = -\hat{R}(T_{cu})\hat{i}_q - p\Omega_m (L_d \hat{i}_d + \hat{\phi}(T_{ai})) + u_q - k_p (i_d - \hat{i}_d) ;$$

where $\hat{R}$ and $\hat{\phi}$ are estimations of the resistance of the windings and of the flux of the magnet and

$L_d$: direct inductance of said electric machine,

$L_q$: quadrature inductance of said electric machine,

$k_d, k_p$: calibration variables,

p: number of pole pairs of the electric machine,

e) determining a temperature $T_{cu}$ for said coils by means of said estimation of resistance $\hat{R}$ of the coils, said resistance $\hat{R}$ being estimated by means of said estimated currents $\hat{i}_d$ and $\hat{i}_q$, and

f) determining a temperature $T_{ai}$ for said magnet by means of said estimation of the intensity of magnetic flux $\hat{\phi}$ of the magnet, said magnet flux $\hat{\phi}$ being estimated by means of said estimated currents $\hat{i}_d$ and $\hat{i}_q$.

2. A method as claimed in claim 1, wherein said resistance $\hat{R}$ of the coils is estimated by means of said measurements and of said currents $\hat{i}_d$ and $\hat{i}q$ estimated by a state observer of the form as follows:

$$\dot{\hat{R}}(T_{cu}) = k_r \left( i_d \frac{\left( \dot{i}_d - \dot{\hat{i}}_d \right)}{L_d} + i_q \frac{\left( \dot{i}_q - \dot{\hat{i}}_q \right)}{L_q} \right)$$

with: calibration variables.

3. A method as claimed in any one of the previous claims, wherein said magnetic flux intensity $\hat{\phi}$ of the magnet is estimated by means of said measurements and of said currents $\hat{i}_d$ and $\hat{i}_q$ estimated by a state observer of the form as follows:

$$\dot{\hat{\phi}}(T_{ai}) = k_\phi \left( p\Omega_m \frac{\left( \dot{i}_q - \dot{\hat{i}}_q \right)}{L_q} \right)$$

with: calibration variables.

4. A method as claimed in any one of the previous claims, wherein said temperature $T_{cu}$ of said coils is determined by means of an equation of the form as follows: $\hat{R} = R_0(1 + \alpha(T_{cu} - T_{ref}))$ with $R_0$ the reference resistance of said coils for reference temperature $T_{ref}$, $\alpha$ a constant temperature resistance parameter of said coils.

5. A method as claimed in any one of the previous claims, wherein said temperature $T_{ai}$ of said magnet is determined by means of an equation of the form as follows: $\hat{\phi} = \phi_0(1 + \beta(T_{ai} - T_{ref}))$ with $\phi_0$ the reference magnetic flux intensity of said magnet for reference temperature $T_{ref}$, $\beta$ a constant temperature resistance parameter of said magnet.

6. A method as claimed in any one of the previous claims, wherein the method comprises a stage of preprocessing electrical quantities upstream from the stages of estimating the resistance of the coils and the magnetic flux intensity of the magnet.

7. A method as claimed in claim 6, wherein said preprocessing of an electrical quantity $y$ is carried out by decomposition of a measured electrical signal $y_m$ into a sum of cosinus and sinus functions depending on the measured position

$$y_m = \sum_{i=1}^{N} \left( a_i \cos(i\theta_m) + b_i \sin(i\theta_m) \right),$$

$\theta_m$ of the rotor      coefficients $a_i, b_i$ being determined by identi-fication, then by conservation of the leading term: $y_f = a_1 \cos(\theta_m) + b1\sin(\theta_m)$.

8. A method as claimed in any one of the previous claims, wherein a temperature $T_{fer}$ is determined for the frame of said electric machine by means of said temperatures $T_{cu}$ of the coils and $T_{ai}$ of the magnet and of energy losses of said electric machine.

9. A method as claimed in claim 8, wherein said temperature $T_{fer}$ of said frame is determined by means of a formula of the type as follows:

$$\dot{\hat{T}} = AT + KC\left(\hat{T} - T\right) + BP$$

with $T = (T_{fer}, T_{cu}, T_{ai})$, $P = (P_{fer}, P_{joules}, P_m)$, $P_{fer}$ corresponding to the iron losses of said electric machine, $P_{joules}$ to the joule losses of said electric machine, $P_m$ to the mechanical losses of said electric machine, $K$ being a gain, $A$ a constant matrix of the thermal model, and $C = [0\ 1\ 1]$.

$$B = \begin{bmatrix} 1 \\ 1 \\ 1 \end{bmatrix}$$

10. A synchronous electric machine diagnostic method, **characterized in that** the following stages are carried out:

   - determining said internal temperatures of said electric machine according to one of the previous claims, and
   - diagnosing overheating of said synchronous machine according to said determined temperatures.

11. A synchronous electric machine control method, **characterized in that** the following stages are carried out:

   - determining said internal temperatures of said electric machine according to any one of claims 1 to 9, and
   - controlling the torque of said synchronous machine according to said determined temperatures.

12. A synchronous electric machine control system (1), **characterized in that** it is suited to apply the control method as claimed in claim 11.

13. A motor vehicle comprising at least one synchronous electric machine (4), **characterized in that** it furthermore comprises a control system (1) as claimed in claim 12.

Figure 1

Figure 2

$(i_m, u_m)$　　　　　　$(\theta_m, \Omega_m)$

```
+---------------------------------------------------------------+
|         ↓                                    ↓                 |
|   +---------------------------------------------------+        |
|   |                OBS (R, φ)                          |        |
|   +---------------------------------------------------+        |
|                                                               |
|              $(\hat{R}, \hat{\phi})$                          |
|                        ↓                                      |
|   +---------------------------------------------------+        |
|   |                DET (T)                            |        |
|   +---------------------------------------------------+        |
+--[ OBS ]------------------------------------------------------+
                         ↓
                  $T_{ai}, T_{cu}$
```

Figure 3

**EP 2 806 556 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009009232 A
- US 20100276927 A
- FR 1103994